# EUROPEAN PATENT SPECIFICATION

(11) **EP 0 480 484 B1**
(45) Date of publication and mention of the grant of the patent: **10.05.1995**
(21) Application number: 91121789.1
(22) Date of filing: 16.01.1987
(51) Int. Cl.: H02K 9/197, H02K 9/22, H02K 19/22, H02K 19/36, H02K 11/00

(54) **Vehicle mounted a.c. generator**
Auf einem Fahrzeug montierter Wechselstromgenerator
Générateur à courant alternatif, monté sur véhicule

(30) Priority: 30.01.1986 JP 20627/86; 30.01.1986 JP 20628/86; 30.01.1986 JP 20629/86; 12.02.1986 JP 28422/86; 13.03.1986 JP 55593/86; 18.03.1986 JP 62061/86; 18.03.1986 JP 62062/86; 18.03.1986 JP 62065/86
(43) Date of publication of application: 15.04.1992
(62) Divisional of application: 87100503.9
(73) Proprietor: MITSUBISHI DENKI KABUSHIKI KAISHA, Tokyo (JP)
(72) Inventor: Kitamura, Yutaka, c/o Mitsubishi Denki K.K., Himeji, Hyogo (JP); Kaneyuki, Kazutoshi, c/o Mitsubishi Denki K.K., Himeji, Hyogo (JP); Iwata, Yoshiyuki, c/o Mitsubishi Denki K.K., Himeji, Hyogo (JP); Aso, Hiroaki, c/o Mitsubishi Denki K.K., Himeji, Hyogo (JP)
(74) Representative: Lehn, Werner, Dipl.-Ing.

(56) References cited:
- EP-A- 0 049 735
- CH-A- 403 960
- DE-A- 2 828 473
- DE-U- 7 012 107
- GB-A- 2 117 187
- US-A- 4 221 982
- PATENT ABSTRACTS OF JAPAN vol. 6, no. 200 (E-135)(1078) 9 October 1982 & JP-A-57 110 044

## Description

The present invention relates to a vehicle mounted a.c. generator adapted to be driven by an engine of the vehicle and, particularly, to the improvement in a cooling system thereof.

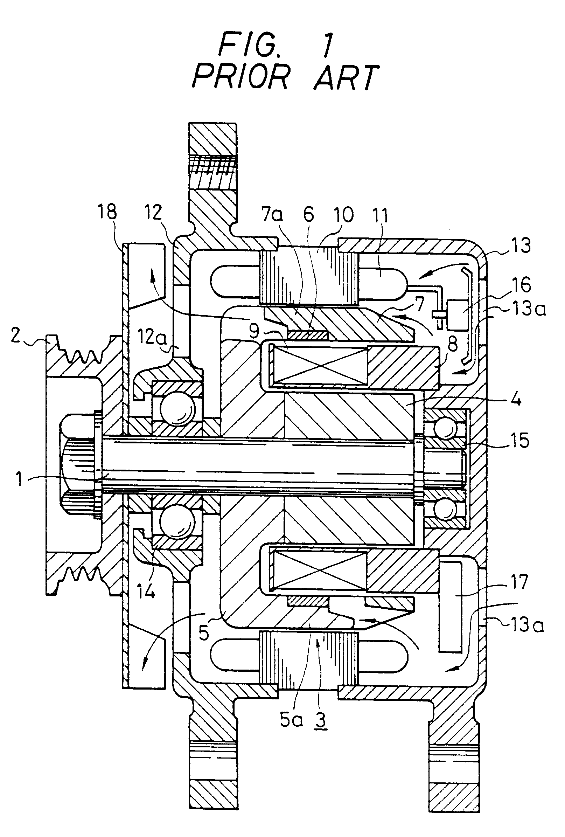

A cross section of a conventional vehicle mounted a.c. generator is shown in Fig. 1, in which a pulley 2 and a rotor 3 are secured to a rotary shaft 1 and the rotor 3 is composed of a rotor core 4 mounted on the shaft 1, a magnetic pole member 5 having a plurality of angularly spaced nails 5a formed peripherally thereof, a support ring 6 of non-magnetic material fixedly secured to an inner periphery of the nails 5a and an opposite magnetic pole member 7 fixedly secured to the support ring 6 and having a plurality of angularly spaced nails 7a which are interleaved with the nails 5a. A stationary exciting core 8 is arranged between the core 4 and the member 7 with air gaps with respect to' the rotor core 4 and the opposite pole member 7 to support an exciting coil 9.

The generator further includes a stator core 10 which supports a stator coil 11 in slots thereof, a front bracket 12 supports the shaft 1 through a bearing 14, an outlet hole 12a formed in the bracket 12, a rear bracket 13 for supporting, together with the front bracket 12, the stator core 10 and the shaft 1 through a bearing 15. The bracket 13 also supports the core 8 fixedly and has an inlet port 13a for cooling air. A rectifier 16 functions to convert a.c. power produced in the stator coil 11 into d.c. power. A voltage regulator 17 detects a generator voltage to control an exciting current and thereby regulates a terminal voltage to a predetermined value. A fan 18 is fixed to the shaft 1.

In the conventional a.c. generator constructed as above, the shaft 1 is rotated by the engine rotation through a belt and the pulley 2. Upon the rotation of the shaft 1, an a.c. voltage is induced in the stator coil 11 which is rectified by the rectifier 16 and regulated by the voltage regulator 17, a resultant d.c. voltage being supplied to the exciting coil 9 and to a load such as a battery.

A cooling air sucked through the inlet port 13a of the rear bracket 13 by a rotation of the fan 18 fixed to the shaft 1 cools the interior of the generator and is discharged through the oulet port 12a of the front bracket 12.

In such a generator, heat generated by the exciting coil 9, the stator coil 11, the bearings 14 and 15 and the voltage regulator 16 housed in the bracket 13 is discharged by the air flow mentioned above. However, it is usually insufficient to cool the inside of the bracket 13 by means of the fan 18. In order to obtain a sufficient cooling effect it is possible to use a larger fan. However, with such a large fan, there may be a large noise produced. Further, since air to be used to cool the generator tends to degrade insulations of various portions thereof, the use of air coolant passing through the inside of the generator should be miminized. In addition thereto, the power required to drive such a large fan becomes considerable.

A vehicle-mounted generator adapted to be driven by an engine of the vehicle is known from EP-A-O 049 735 and comprises a rotor shaft, a rotor core, an exciting coil, a stationary core supporting the exciting coil, a stator core, a stator coil, a front bracket, a rear bracket upon which the stationary core is fixed, and a cooling cover forming a branch cooling passage for cooling a rectifier and voltage regulator mounted on the rear bracket.

A primary object of the present invention is to provide a vehicle mounted a.c. generator which can restrict noise to a minimum level while providing a sufficient cooling effect.

Another object of the present invention is to provide a vehicle mounted a.c. generator having a simplified cooling system with a minimized noise and minimized power loss.

These objects are solved according to the present invention by a vehicle mounted a.c. generator including the features of claim 1. Detailed embodiments thereof are described in the dependent claims.
Fig. 1 is a cross-section of a conventional vehicle mounted a.c. generator;
Fig. 2 is a cross-section of an embodiment of the present invention;
Fig. 3 is a partially cut away front view of a main portion of the embodiment shown in Fig. 2;
Fig. 4 is a cross-section of another embodiment of the present invention;
Figs. 5, 6 and 7 are cross-sections of other embodiments of the present invention. respectively;
Figs. 8 and 9 are a cross-section and a partially cut away front view of other embodiments of the present invention, respectively;
Figs. 10 and 11 are cross-sections of other embodiments of the present invention, respectively;
Fig. 12 is a cross-section of another embodiment of the present invention;
Fig. 13 is an enlarged view of a main portion of the embodiment shown in Fig. 12;
Figs. 14 and 15 are cross-sections of other embodiments of the present invention, respectively; and
Fig. 16 is a partially cut away front view of the embodiment shown in Fig. 15.

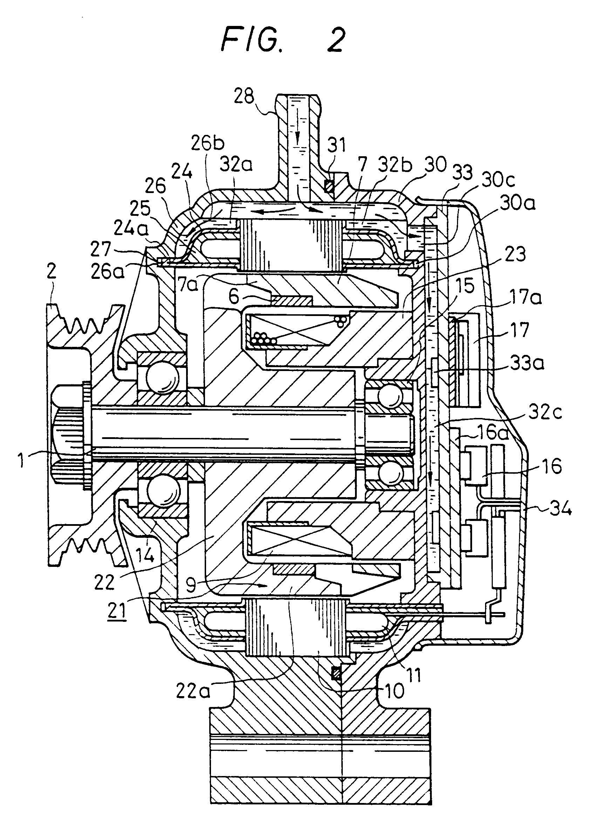

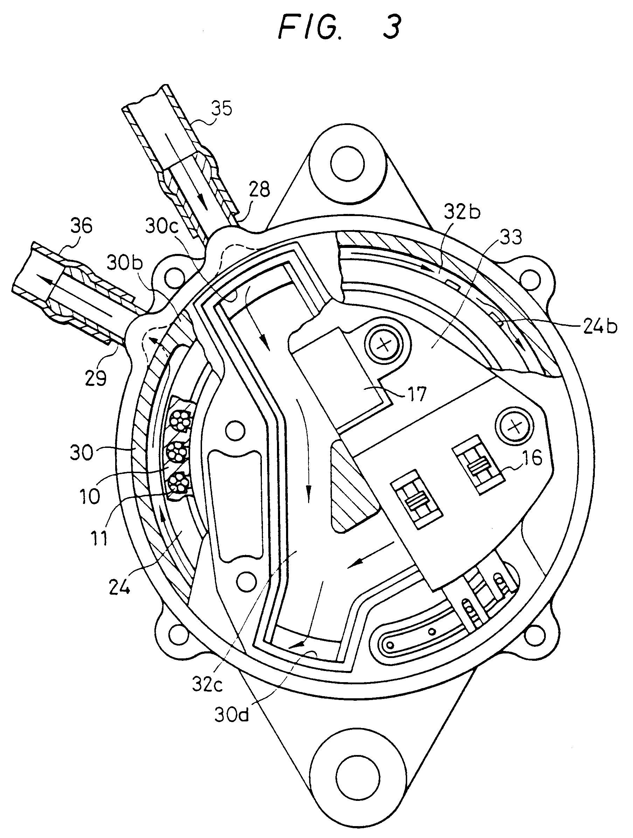

In Figs. 2 and 3, reference numerals 1, 2, 6, 7, 7a, 9-11 and 14-17 depict the same components as those of the conventional generator shown in Fig. 1, respectively, and therefore descriptions of these components are omitted for avoidance of duplication. A reference numeral 21 depicts a rotor composed of a magnetic pole member 22 fixedly secured to a shaft 1 and having a plurality of angularly spaced nails 22a provided on a periphery thereof which are interleaved with nails 7a of an opposite magnetic pole member 7.

A stationary exciting core 23 is arranged between the magnetic pole member 22 and the opposite magnetic pole member 7 with air gaps therebetween and supports an exciting coil 9. An enclosure 24 formed of a metal such as aluminium having a high thermal conductivity encloses a cylindrical stator coil 11. An insulating filler 25 such as synthetic resin fills spaces between it and the opposite end portions of the stator coil 11 to provide a liquid-tight connection to the stator core 10 to thereby protect the stator coil against the liquid coolant. A plurality of heat radiating fins 24b are formed in opposite end portions of an inner wall of the enclosure 24 circumferentially, as shown in Fig. 3.

A front bracket 26 supports the stator core 10 and is formed on an inner surface thereof with an annular groove 26a in which the fins 24a of one end portion of the enclosure 24 fit liquid-tightly with the aid of a gasket 27 of a material such as viscose silicon compound to form a pair of annular coolant passages 32a extending peripherally thereof between the enclosure 24 and the inner wall of the bracket 26. The front bracket 26 is provided with a coolant inlet pipe 28 and a coolant outlet pipe 29 between which a partition 26b is provided. A tube 35 is connected to the coolant inlet pipe 28 to supply a portion of the engine coolant from an outgoing portion of an engine cooling system and a tube 36 is connected to the outlet pipe 29 to return the coolant to the cooling system. Reference numeral 30 depicts a rear bracket to be fixedly secured through an O-ring 31 to the front bracket 26 which is formed on an inner surface thereof with a groove 30a in which the fins 24a of the other end portion of the enclosure 24 fits liquid-tightly with the aid of the viscose gasket 27. The rear bracket 30 fixedly supports the core 23 and the bearing 15. The bracket 30 is formed with a coolant branch inlet port 30c and a return port 30d. A coolant passage 32b is formed between the inner wall of the rear bracket 30 and an outer surface of the enclosure 24 and a partition 30b is also formed to separate the incoming side from the outgoing side.

A cooling cover 33 of a metal. having a good thermal conductivity is liquid-tightly mounted on an outer end portion of the rear bracket 30, between which a branch passage 32c is formed through which the coolant from the branch port 30c flows. The coolant is then returned through the return port 30d to the passage 32b. A plurality of heat radiating fins 33a are arranged on an inner surface of the cooling cover 33 along the flowing direction of the coolant. A rectifier 16 is fixedly secured through a heat sink 16a to an outer end surface of the cooling cover 33 and a voltage regulator 17 is also secured through a heat sink 17a thereto. Reference numeral 34 depicts a protection cover mounted to the rear bracket 30.

A cooling effect obtained by the cooling system mentioned above will be described. A portion of the coolant of the vehicle engine, which is at a relatively low temperature, is used for cooling the generator. The coolant portion flows from the inlet pipe 28 through the passages 32a and 32b as shown by arrows to cool the stator core 10 and the stator coil 11. The coolant whose temperature is risen thereby is discharged through the outlet pipe 29 to the return path of the engine coolant circulation system.

A portion of the coolant flow through the inlet pipe 28. into the passage 32b passes through the branch port 30b and the branch passage 32c to cool the rectifier 16 and the voltage regulator 17 indirectly through the cooling cover 33 and then returns to the passage 32b as shown by arrows.

The front bracket 26 cooled directly by the coolant absorbs heat generated in the bearing 14, and the rear bracket 30 which is also cooled directly absorbs heat generated in the bearing 15 and in the exciting coil 9 through the core 23.

The plurality of heat radiating fins 24b provided on the respective end portions of the enclosure 24 and the plurality of theat radiating fins 33a provided on the cooling cover 33 increase the heat exchange effect and hence the cooling effect.

It is possible to use a separate coolant circulation system instead of the cooling passage from the passage 32b through the branch passage 32c.

Thus, the stator coil 11, the rectifier 16, the voltage regulator 17 and the energizing coil 9 which produce large heat are cooled effectively, so that temperatures thereof are restricted substantially without using a fan cooler, which is a source of noise.

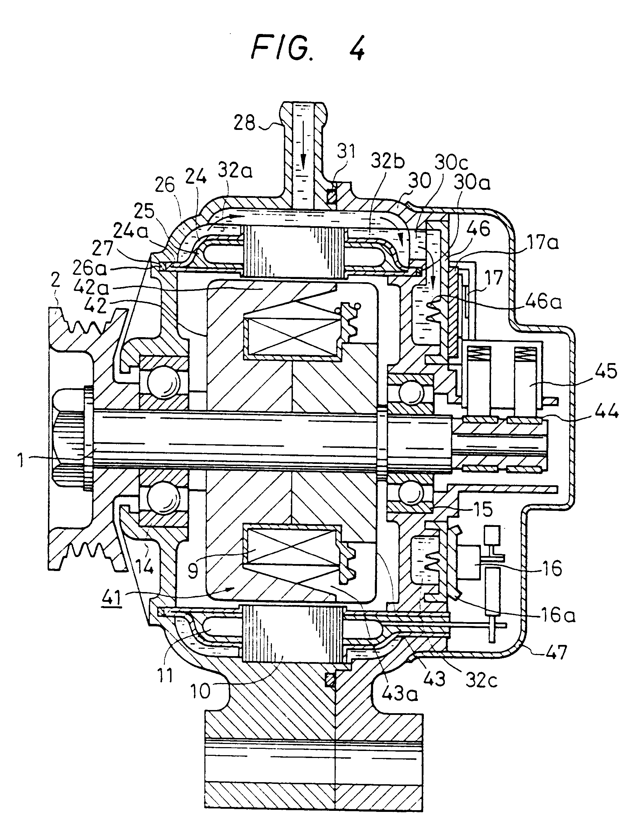

Fig. 4 shows a second embodiment of the present invention in which components shown by the same reference numerals as used in Figs. 2 and 3 are the same components as those in the first embodiment. A rotor 41 composed of a first and its opposite pole core 42 and 43 fixedly secured to a rotor shaft 1 and an exciting coil 9 supported thereby. A plurality nails 42a protruding from the pole core 42 are interleaved with a plurality nails 43a protruding from the core 43 as in the first embodiment. A brush device 45 supplies electric power to slip-rings 44 connected to the exciting coil 9. A cooling cover 46 is liquid-tightly mounted to a rear bracket 30 to form a branch passage 32c therebetween and a rectifier 16 and a voltage regulator 17 are mounted on the cooling cover 46. Reference numeral 47 depicts a protection cover.

The front and rear brackets 26 and 30 are directly cooled by the coolant and inside air cooled by these brackets is agitated by rotation of the rotor 41 to cool the exciting coil 9 effectively.

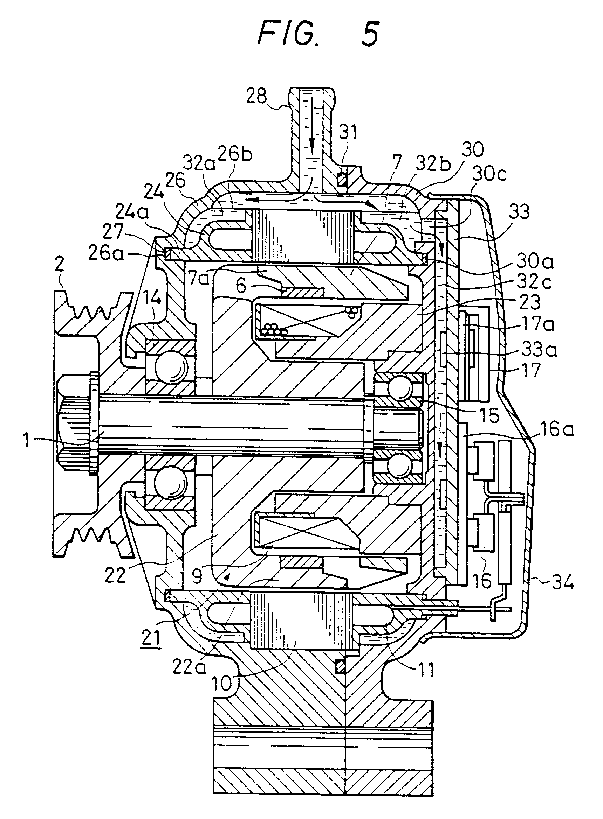

In the embodiment shown in Figs. 2 and 3, the stator coil 11 is covered by the enclosure 24 of good thermally conductive material and the enclosure is filled with resin. In a third embodiment shown in Fig. 5, however, a stator coil 11 is enclosed directly by an insulating synthetic resin mold and supported liquid-tightly by front and rear brackets 26 and 30 so that coolant passages 32a and 32b are formed.

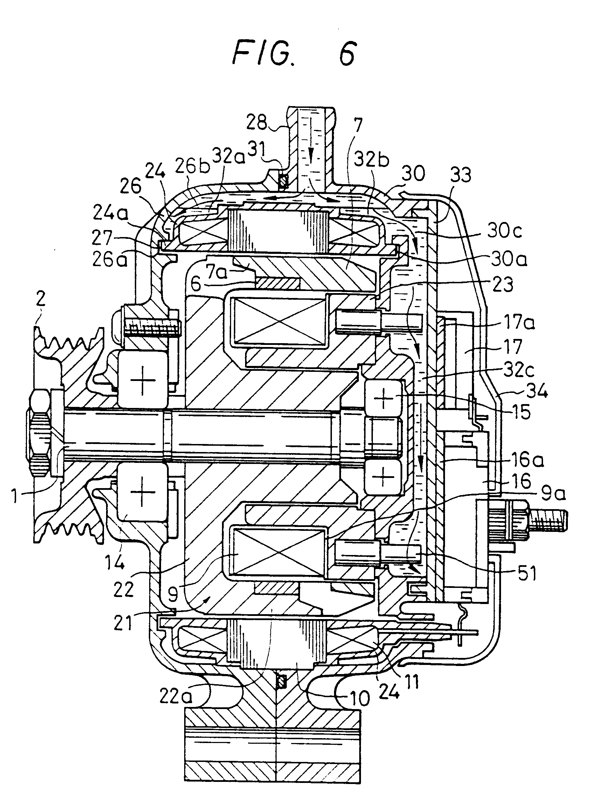

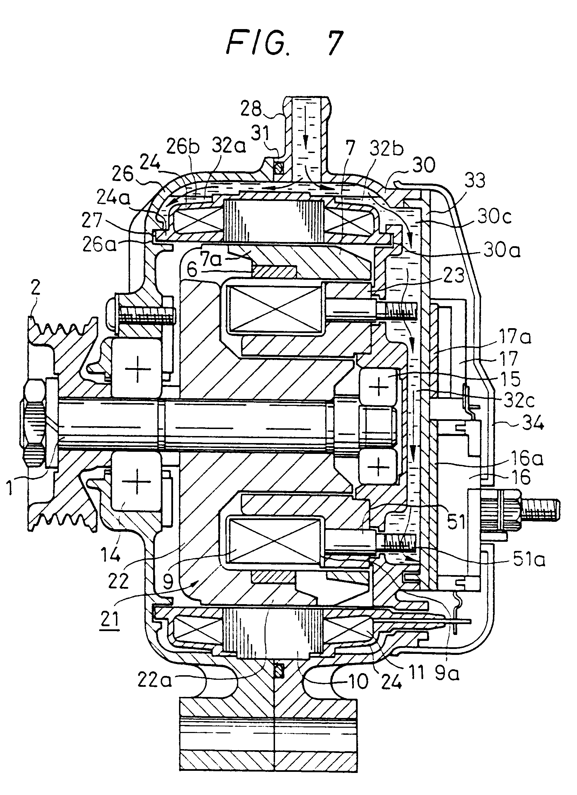

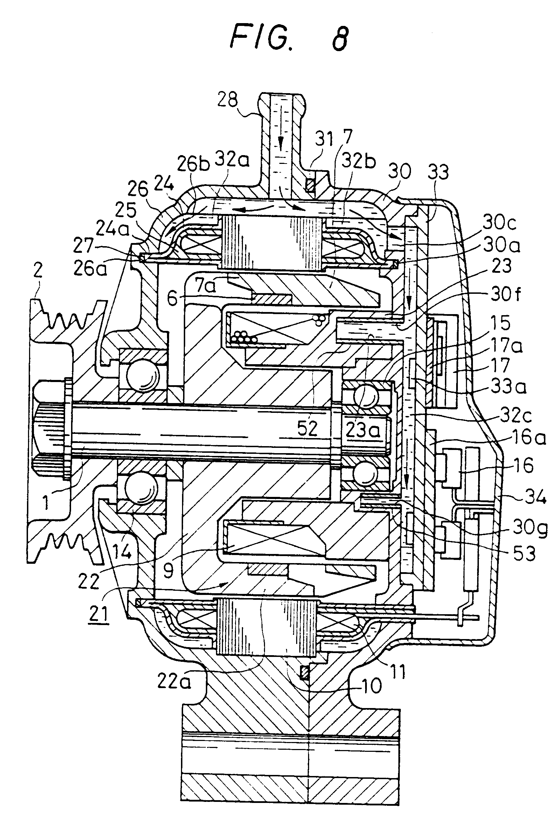

Fig. 6 shows a fourth embodiment of the present invention in which one end of a good thermally conductive member 51 is thermally coupled to the stationary core 23 and the other end thereof protrudes into a branch passage 32c formed between the rear bracket 30 and the cooling cover 33. With this construction, a coolant flowing through the branch passage 32c cools a rectifier 16 and a voltage regulator 17 indirectly through the cooling cover 33 and a bearing 15 and the core 23 indirectly through a front bracket 26. Further, the core 23 and an exciting coil 9 are cooled by the thermally conductive member 51.

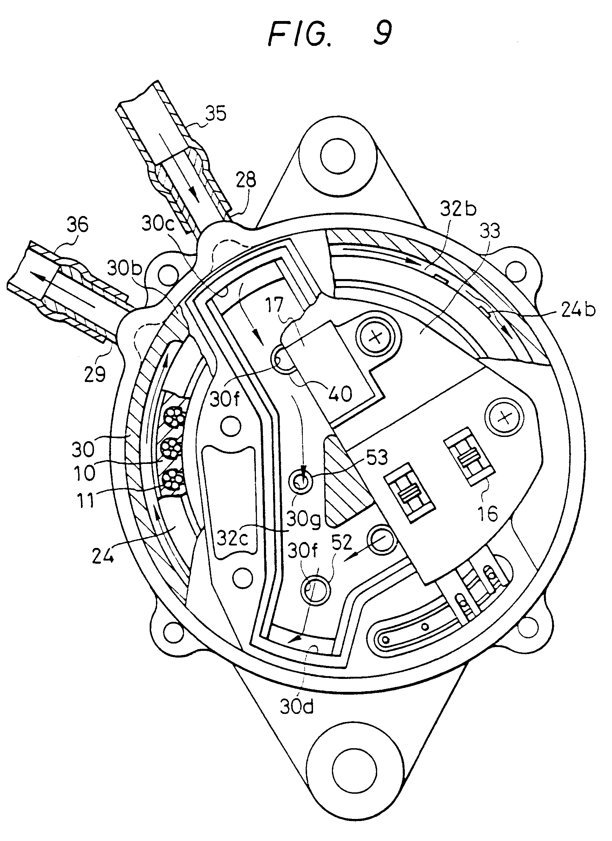

Fig. 7 is a fifth embodiment of the present invention which differs from the fourth embodiment in Fig. 6 in that a plurality of heat radiating fins 51a in the form of flanges are formed on the protruded portion of the thermally conductive member 51, that a bobbin 9a of the exciting coil 9 is formed of a good thermal conductivity material and that an end portion of the thermally conductive member 51 is pressure-contacted to the bobbin 9a to obtain a good thermal coupling therebetween. With such construction of the fifth embodiment, the cooling of the exciting coil 9 becomes more effective.

It is possible to use a so-called heat pipe composed of a metal pipe filled with a coolant which evaporates with heat and liquifies when cooled as the thermally conductive member 51.

Figs. 8 and 9 show a sixth embodiment of the present invention. In the sixth embodiment, a stationary core 23 is provided in an outer end surface thereof with a blind hole 23a and a rear bracket 30 is provided with blind holes 30f and 30g. Pipes 52 and 53 are inserted therein, into which a portion of a coolant flowing through a passage 32c is introduced to cool the core 23 and a bearing 15 peripherally.

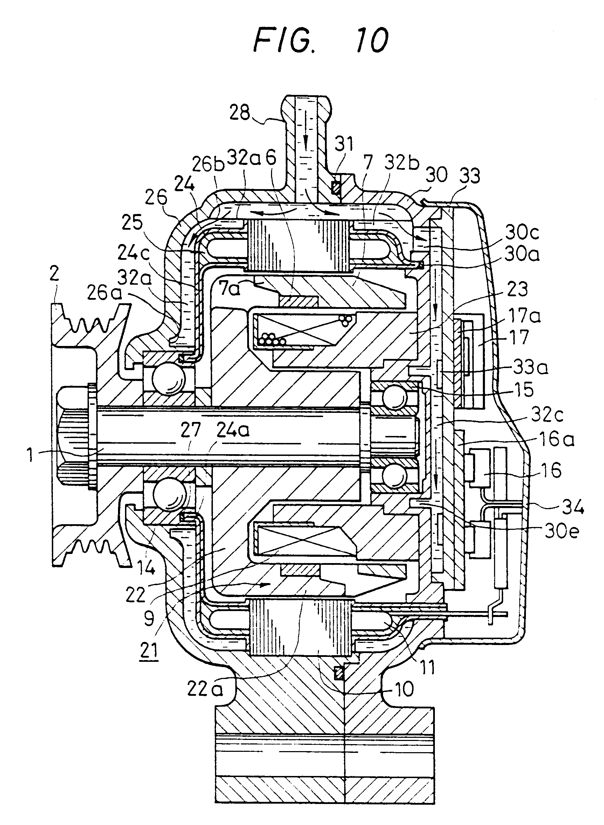

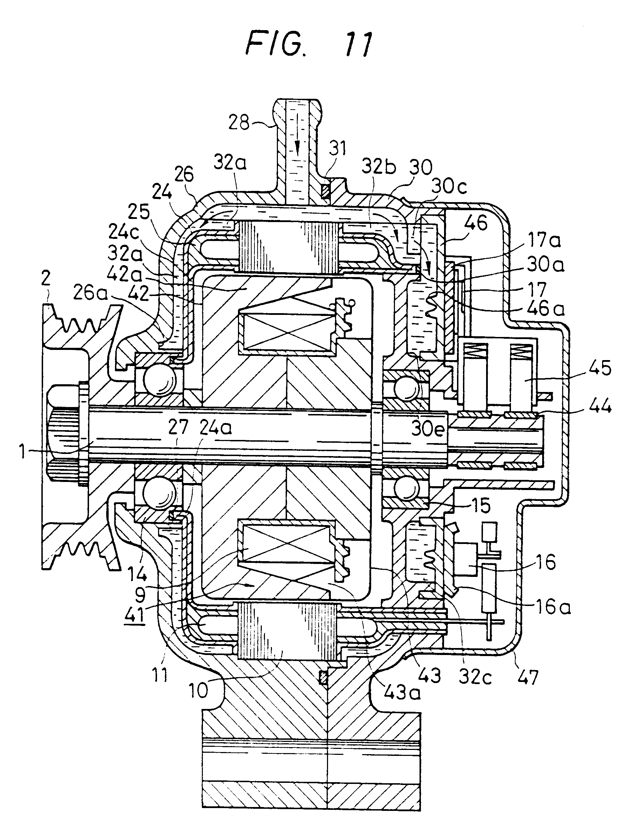

It is possible to construct the generator such that the bearings 14 and 15 supported by the front and rear brackets 26 and 30 are cooled by a coolant as shown in Figs. 10 and 11. In Figs. 10 and 11, which show a seventh and eighth embodiment, respectively, an end portion of the enclosure 24 enclosing the stator coil 11 is elongated axially to engage with an outer peripheral end surface of the bearing 14 and the front bracket 26 is formed in an area thereof surrounding the bearing 14 with an annular recess 26a. Further, the rear bracket 30 is formed with an annular recess 30a to receive the other end of the enclosure 24. It also has another annular recess 30e. The coolant is introduced into the recesses 26a and 30e to cool the bearings 14 and 15.

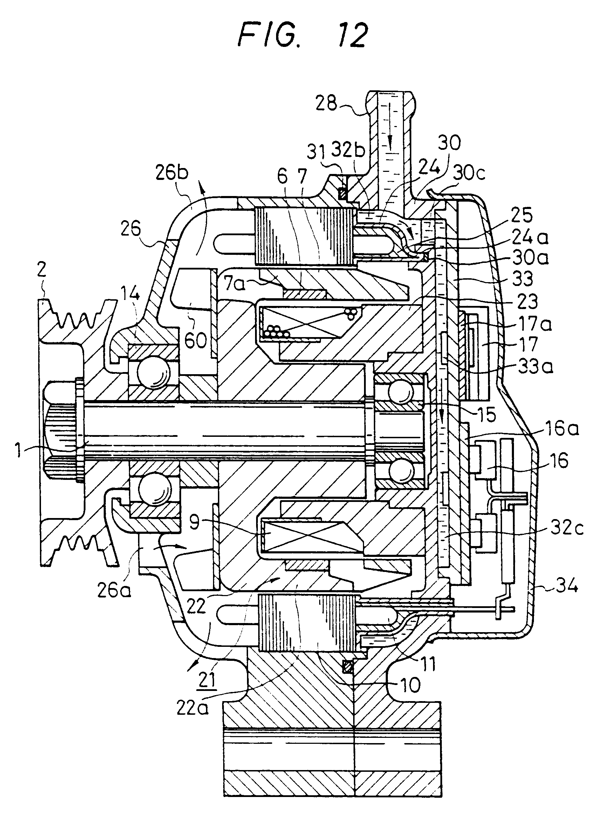

Fig. 12 shows a ninth embodiment of the present invention which further includes a fan cooling system in addition to the liquid coolant system.

In Fig. 12, the rear bracket 30 is provided with a coolant inlet pipe 28 and a coolant outlet pipe 29 and a coolant passage 32a is formed to pass a coolant through an area of the stator coil 11 facing the rear bracket 30. Further, a branch passage 32c for cooling the rectifier 16 and the voltage regulator 17 is also formed. The above mentioned portion of the construction of the emobdiment shown in Fig. 12 is the same as that of the embodiment shown in Figs. 2 and 3.

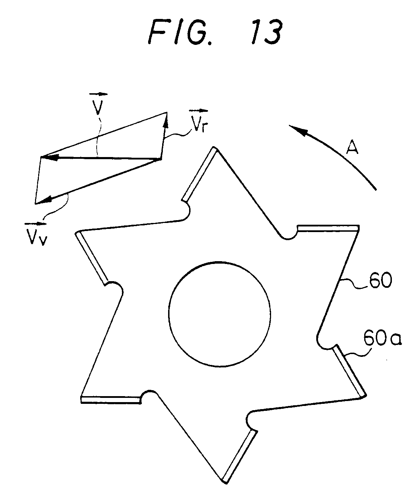

In the embodiment in Fig. 12, the front bracket 26 is formed in an area surrounding the bearing 14 with air intake holes 26a and in a peripheral area with air discharge holes 26b. A fan 60 is provided on a front end surface of the magnetic pole core 22. The fan 60 is composed of a generally hexagonal plate having six extensions which are bent at right angles to form fins 60a as shown in Fig. 13. Each of the fins 60a is slanted at a sweepback angle with respect to the direction A of rotation thereof.

In operation, the fan 60 is rotated with a rotation of the rotor shaft 1 driven by the vehicle engine through the belt and pulley 2 to take air through the intake holes 26a into an interior of the front bracket 26. The cooling air cools the bearing 14 and a front end portion of the stator coil 11 and is discharged through the discharge holes 26b.

On the other hand, a portion of a low temperature liquid coolant for the vehicle engine is branched and introduced through the inlet pipe 28 into the passage 32b as shown by an arrow to cool the rear side end of the stator coil 11 and then discharged through the outlet pipe 29 to the return path of the engine coolant circulation system.

A portion of the coolant introduced through the inlet pipe 28 into the passage 32b flows through a branch port 30c to the branch passage 32c to indirectly cool the rectifier 16 and the voltage regulator 17 through the cooling cover 33 and then returns to the passage 32b.

The rear bracket 30 which is directly cooled by the liquid coolant cools the bearing 15 and the exciting coil 9 through the stationary core 23.

A speed vector of the cooling air passed through the fin 60a of the fan 60 is Vr with respect to a rotary coordinate system fixed to the fan 60 as shown in Fig. 13. However, the vector of the cooling air leaving the fan 60 becomes V since a relative speed vector Vv with respect to an inertia coordinate system is added as shown in Fig. 13. With the fan construction shown in Fig. 12, an absolute speed V of the cooling air is very large, so that the cooling effect of the stator coil 11 becomes several times that of the conventional fan. Therefore, the fan 60 can be small in size comparing with the fan 18 shown in Fig. 1 so long as it is to be expected to obtain the same cooling effect. With such a small-sized fan, the noise is very small and a higher speed operation of the fan is achieved without difficulty, while providing a sufficient cooling effect.

Thus, the stator coil 11, the rectifier 16, the voltage regulator 17 and the exciting coil 9 which are large heat generators of the a.c. generator are effectively cooled by the air coolant and the liquid coolant.

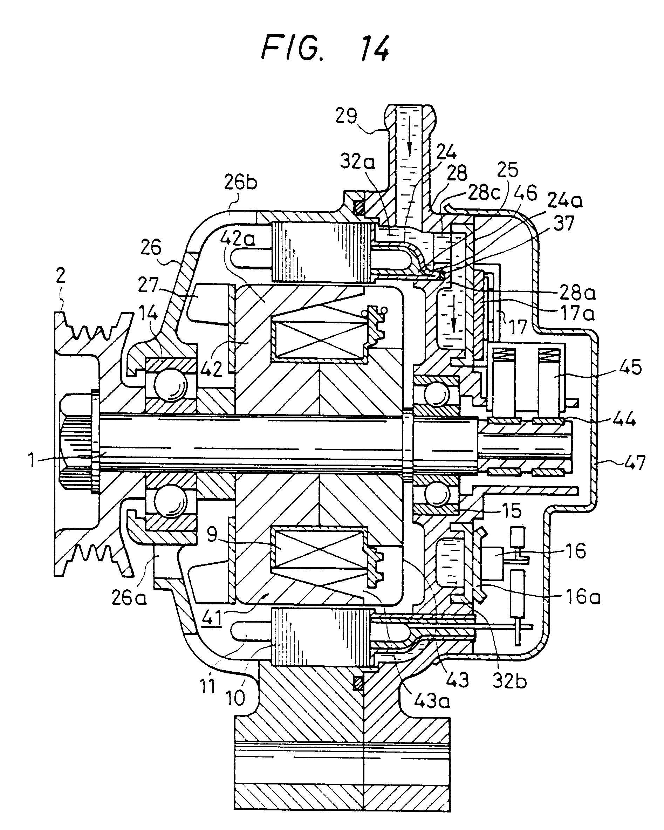

Fig. 14 shows a tenth embodiment of the present invention in which an energizing core 42 supports the energizing coil 9 of the embodiment in Fig. 12.

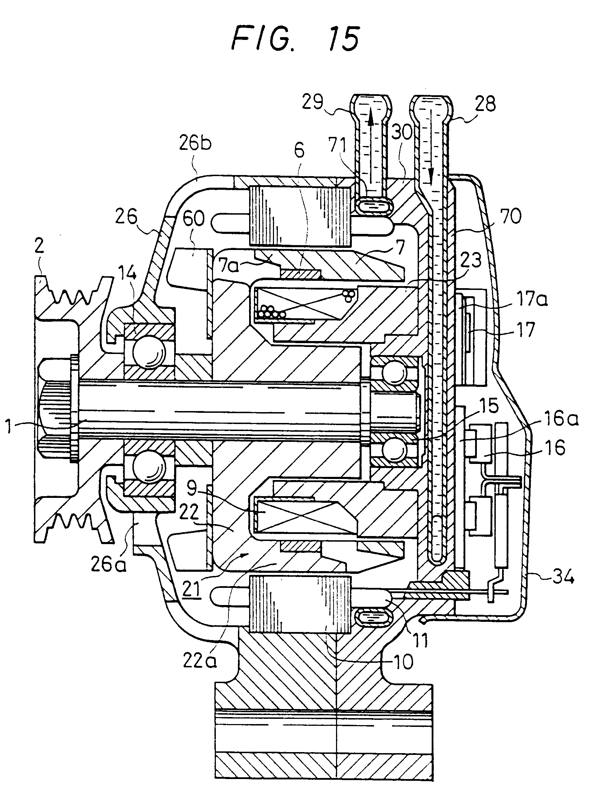

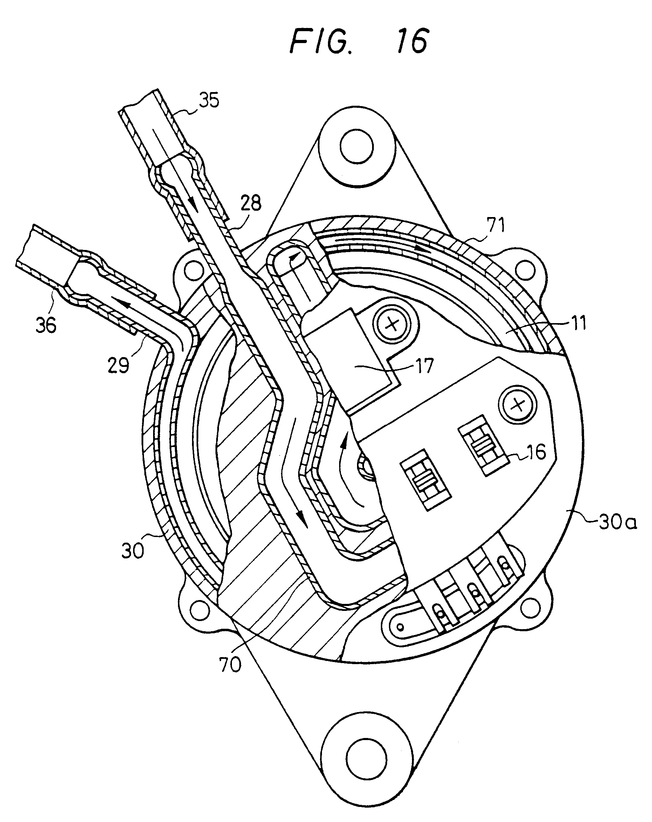

Figs. 15 and 16 show an eleventh embodiment of the present invention. In this embodiment, a cooling pipe 70 connected to an inlet pipe 28 is arranged around the inside of an end wall of a rear bracket 30 and a cooling pipe 71 connected to an outlet pipe 29 is arranged around the inside of the side wall of the rear bracket 30, through which a cooling liquid is circulated to cool a stator coil 11, a bearing 15, a rectifier 16 and a voltage regulator 17.

As described hereinbefore, according to the present invention, the noise and energy loss due to the use of the cooling fan can be at least minimized while increasing the cooling efficiency of the generator. Further, since the generator is liquid-tightly sealed, it is possible to avoid the problems of insulation degradation due to atmosphere and other damages due to toxic gas or salt damage.

## Claims

1. A vehicle mounted a.c. generator, comprising: a rotor shaft (1) adapted to be driven by a vehicle engine; a rotor core (4) fixedly secured to said rotor shaft (1); an exciting coil (9) arranged opposite an inner periphery of said rotor (1) for exciting said rotor armature; a stationary core (23) for supporting said exciting coil (9); a stator core (10) arranged opposite an outer periphery of said rotor core (4) and mounting a stator coil (11) thereon; a front bracket (26) for supporting one end of said stator core (10) directly and said rotor shaft (1) indirectly through a bearing (14); a rear bracket (30) for supporting the other end of said stator core (11) directly and said rotor shaft (1) indirectly through a bearing (15), said stationary core (23) being fixedly secured to said rear bracket (30); a cooling cover (33) for covering a side end surface of said rear bracket (30) to form, together with said rear bracket (30), a branch coolant passage (32c); a rectifier (16) mounted to an outer periphery of said cooling cover (33); a voltage regulator (17) mounted to said outer periphery of said cooling cover (33); high thermally conductive members (51) coupled to said stationary core (23) and extending therefrom through said rear bracket (30) into said branch coolant passage (32c); and an annular coolant passage (32a) formed between said stator coil (11) and said brackets (26, 30) for cooling said stator coil (11); said first cooling passage being for cooling said rectifier, said voltage regulator (17) and said exciting coil (9).

2. The vehicle mounted a.c. generator as claimed in claim 1, wherein said high thermally conductive members (51) are pressure contacted at one end thereof to a bobbin (9a) of said exciting coil (9).

3. The vehicle mounted a.c. generator as claimed in claim 1, wherein a portion of each of said high thermally conductive members (51) in said branch coolant passage (32c) is formed with a plurality of heat radiating fins (51a).

4. The vehicle mounted a.c. generator as claimed in claim 1, wherein each of said high thermally conductive members (51) comprises a heat pipe.

## Patentansprüche

1. An einem Fahrzeug angebrachter AC-Generator, welcher umfaßt: eine Rotorwelle (1), die angepaßt ist, durch ein Fahrzeugmotor angetrieben zu werden; einen Rotorkern (4), der fest an die Rotorwelle (1) angebracht ist; eine Anregungsspule (9), die gegenüberliegend einer inneren Peripherie des Rotors (1) zum Anregen der Rotorarmatur angeordnet ist; einen stationären Kern (23) zum Haltern der Anregungsspule (9); einen Statorkern (10), der gegenüberliegend einer äußeren Peripherie des Rotorkerns (4) angeordnet ist, zum Anbringen einer Statorspule (11) darauf; eine Vorderklammer (26) zum Haltern eines Ende des Statorskerns (10) in direkter Weise und der Rotorwelle (1) in indirekter Weise über ein Lager (14); eine Hinterklammer (30) zum Haltern des anderen Endes des Statorkerns (11) in direkter Weise und der Rotorwelle (1) in indirekter Weise über ein Lager (15), wobei der stationäre Kern (23) fest angebracht ist an der Hinterklammer (30); eine Kühlabdeckung (33) zum Bedecken einer Seitenendoberfläche der Hinterklammer (30) zum Bilden einer Zweigkühlmittelpassage (32c) zusammen mit der Hinterklammer (30); einen an einer äußeren Peripherie der Kühlabdeckung (33) angebrahten Gleichrichter (16); einen Spannungsregler (17), der an der äußeren Peripherie der Kühlabdeckung (33) angebracht ist; thermisch hochleitfähige Elemente (51), die gekoppelt sind mit dem stationären Kern (23) und sich davon durch die Hinterklammer (30) in die Zweigkühlpassage (32c) erstrecken; und eine ringförmige Kühlmittelpassage (32a), ausgebildet zwischen der Statorspule (11) und Klammern (26, 30) zum Kühlen der Statorspule (11); wobei die erste Kühlmittelpassage zum Kühlen des Gleichrichters, des Spannungsreglers (17) und der Anregungsspule (9) dient.

2. An einem Fahrzeug angebrachter AC-Generator nach Anspruch 1, dadurch gekennzeichnet, daß die thermisch hochleitfähigen Elemente (51) an einem Ende davon druckkontaktiert sind mit einem Spulenkörper (9a) der Anregungsspule (9).

3. An einem Fahrzeug angebrachter AC-Generator nach Anspruch 1, dadurch gekennzeichnet, daß ein Abschnitt jedes der thermische hochleitfähigen Elemente (51) in der Zweigkühlmittelpassage (32c) ausgebildet ist mit einer Vielzahl wärmeabstrahlender Finnen (51a).

4. An einem Fahrzeug angebrachter AC-Generators nach Anspruch 1, dadurch gekennzeichnet, daß jedes der thermisch hochleitfähigen Elemente (51) eine Wärmeleitung umfaßt.

## Revendications

1. Générateur de courant alternatif monté sur véhicule, comprenant : un arbre de rotor (1) adapté pour être commandé par un moteur de véhicule ; un noyau de rotor (4) fixé rigidement audit arbre de rotor (1) ; une bobine inductrice (9) disposée en face d'une périphérie intérieure dudit rotor (1) pour exciter ladite armature de rotor ; un noyau stationnaire (23) pour soutenir ladite bobine inductrice (9) ; un noyau de stator (10) disposé en face d'une périphérie extérieure dudit noyau de rotor (4) et montant une bobine de stator (11) dessus ; un support avant (26) pour supporter directement une extrémité dudit noyau de stator (10) et indirectement ledit arbre de rotor (1) par un palier (14) ; un support arrière (30) pour supporter directement l'autre extrémité dudit noyau de stator (11) et indirectement ledit arbre de rotor (1) par un palier (15), ledit noyau stationnaire (23) étant fixé rigidement audit support arrière (30) ; un couvercle de refroidissement (33) pour recouvrir une surface d'extrémité latérale dudit support arrière (30) pour former, avec ledit support arrière (30), un passage de distribution de refroidisseur (32c) ; un redresseur (16) monté sur une périphérie extérieure dudit couvercle de refroidissement (33) ; un régulateur de tension (17) monté à ladite périphérie extérieure dudit couvercle de refroidissement (33) ; des éléments à haute conduction thermique (51) couplés audit noyau stationnaire (23) et se prolongeant à partir de là par ledit support arrière (30) dans ledit passage de distribution de refroidisseur (32c) ; et un passage annulaire de refroidisseur (32a) formé entre ladite bobine de stator (11) et lesdits supports (26, 30) pour refroidir ladite bobine de stator (11) ; ledit premier passage de refroidissement étant pour refroidir ledit redresseur, ledit régulateur de tension (17) et ladite bobine inductrice (9).

2. Générateur de courant alternatif monté sur véhicule selon la revendication 1, dans lequel lesdits éléments de haute conduction thermique (51) sont mis en contact par pression à une de leurs extrémités avec une bobine (9a) de ladite bobine inductrice (9).

3. Générateur de courant alternatif monté sur véhicule selon la revendication 1, dans lequel une partie de chacun desdits éléments de haute conduction thermique (51) dans ledit passage de distribution de refroidisseur (32c) est formée avec une pluralité d'ailettes de radiation de chaleur (51a).

4. Générateur de courant alternatif monté sur véhicule selon la revendication 1, dans lequel chacun desdits éléments de haute conduction thermique (51) comprend un tuyau de chaleur.
